# EUROPEAN PATENT SPECIFICATION

(11) **EP 1 115 963 B1**
(45) Date of publication and mention of the grant of the patent: **30.07.2003**
(21) Application number: 99968017.6
(22) Date of filing: 24.09.1999
(51) Int. Cl.: F02C 7/18, F01D 5/18, F02C 3/36, F02C 3/10

(54) **GAS TURBINE ENGINE**
GASTURBINE
TURBOMACHINE

(30) Priority: 25.09.1998 US 161115
(43) Date of publication of application: 18.07.2001
(73) Proprietor: ALM Development, Inc., Washington, DC 20036 (US)
(72) Inventor: RAKHMAILOV, Anatoly, Rostov Don (RU)
(74) Representative: Müller-Boré & Partner Patentanwälte
(86) International application number: PCT/US99/20886
(87) International publication number: WO 00/020740

(56) References cited:
- DE-A- 3 713 923
- US-A- 3 826 084

## Description

This application cross-references three copending.U.S. patent applications, each of which was filed on September 25, 1998, as U.S. Patent Application Serial No. 09/161,104, 09/161,114 and 09/161,170, respectively, each of which copending U.S. applications is incorporated herein by reference.

The invention relates to the field of gas turbine engines, and more specifically, to an improved gas turbine engine using compressor fluid to maintain a thermal boundary layer between turbine blades and heated fluid from the combustor.

### Background of the Invention

A type of prior art gas turbine has a compressor, a fuel source, a source of air for combustion, a casing; and a combustor to prepare heated fluid from fuel and combustion air. The combustor has a combustion zone that is connected to the fuel source and the source for combustion air. It contains a cooling zone for cooling the resulting heated fluid before reaching the turbine. The combustor cooling zone is connected to the compressor. The heated fluid temperature fluctuates depending on operating conditions. In conventional gas turbine engines, these temperature fluctuations result in strong temperature-induced stresses imparted on the engine components.

In these prior art gas turbines, virtually the entire compressor fluid flow is directed to the combustor. Fluid heated in the combustor is cooled by the compressor fluid flow in the combustor cooling zone. This engine has a turbine rotor disk with blades that receive heated fluid from the combustor. The temperature of this heated fluid is quite high and, under certain conditions, the fluid can overheat the turbine rotor disk blades. To prevent such overheating, each blade has an interior channel that receives air from the compressor. As a result, part of the fluid coming from the compressor (about 3% to 5% of the total flow) is supplied to the interior channel of the blades to keep their temperature within design limits. One example of this gas turbine engine is disclosed in US patent 3,826,084 to Branstrom et al.

The heated fluid also has to be cooled after fuel combustion. Normally, this is done in the combustor, to which the major part of the fluid from the compressor would be admitted.

Thus, in this prior art gas turbine, substantially all of fluid coming from the compressor is supplied to the combustor cooling zone to cool the fluid before it enters the turbine. When fluid from the compressor is mixed with the heated fluid in the combustor cooling zone, about 3% to 5% of the fluid's energy is lost. Diverting about 3% of fluid from the compressor to the turbine rotor disk blades results in another 3% in losses. In addition, the combustor for this prior art gas turbine has to be made larger to accommodate the cooling zone.

### Summary of the Invention

It is an object of the invention to provide a gas turbine engine that would have a better efficiency and lower harmful emissions.

It is another object of the invention to reduce the cooling zone losses of the prior art combustor.

Another object of the invention is to provide a more compact gas turbine engine.

A further object of the invention is to prolong the life of the gas turbine engine.

The foregoing objects are accomplished through the design of a gas turbine engine having a turbine blade flow portion located between a blade inlet edge and outlet edge, and having a compressor to supply a fluid flow, comprising a substantial portion of compressor fluid output, along the outside surface of the blade flow portion, thus providing a thermal insulating boundary layer over which flows heated fluid from the combustor. Heated fluid formed in the combustor flows without further cooling directly to the turbine blades, thereby reducing losses associated with cooling.

Other objects and advantages of the invention will become apparent from the following detailed description of preferred embodiments and accompanying drawings.

### Brief Description of the Drawings

Figure 1 shows a diagram of a gas turbine engine according to the invention;
Figure 2 shows a side elevation sectional view of a gas turbine engine according to the invention (the compressor is not shown);
Figure 3 shows various embodiments of a turbine rotor disk blade (a cross-sectional view taken along line II-II in Figure 2;
Figure 4 shows another embodiment of a gas turbine engine according to the invention in a view similar to that depicted in Figure 2 (the compressor is not shown).

### Detailed Description of the Drawings

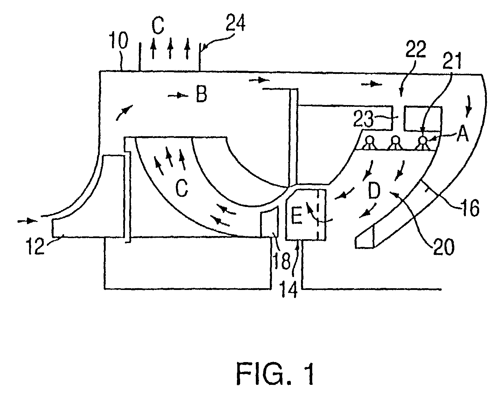

In Figure 1, a gas turbine engine has a casing (10), a compressor (12) for supplying a compressed fluid, a turbine rotor disk (14) mounted downstream of compressor (12), a combustor (16) to prepare heated fluid for the turbine and a compressor turbine rotor disk (18) for driving compressor (12). Turbine rotor disk (14) rotates in a direction opposite to that of compressor rotor disk (18). Fluid flows from turbine rotor disk (14) directly to the compressor turbine rotor disk (18). Combustor (16) has nozzles (21) to admit fuel supplied from a fuel source (not shown). Combustor (16) defines a combustion zone (20) that occupies substantially the entire interior space of the combustor (16). Combustion air is supplied in the direction shown schematically by arrow A to the inlet part of the combustor (16) where nozzles (21) are located.

Most of the fluid from compressor (12( is supplied to turbine rotor disk (14), bypassing combustor (16), as shown by arrows B, through passage (22) in casing (10). The range of fluid flowing directly to the turbine is between approximately 55% and 85% of the total fluid flow. Any flow substantially less than 55% would not achieve the desired cooling for the turbine blades and associated components, and a flow of substantially greater than 85% would introduce losses because it would lead to incomplete combustion in the combustor. This fluid flow is admitted to turbine rotor disk (14), envelops the turbine blades and goes to compressor turbine rotor disk (18) to drive compressor (12). Part of this fluid goes to combustor (16) as described below. Exhaust gases from compressor turbine rotor disk (18) are removed through an exhaust manifold (24) in the direction shown by arrows C.

Only that part of the total fluid that is used for fuel atomizing (about 25% of the entire quantity of the fluid from the compressor) is supplied to combustor (16) through a port (23). Combustor (16) does not have a cooling zone in combustor (16), and fluid goes from combustor (16) uncooled to turbine rotor disk (10) in the direction shown schematically by arrows D. The fluid moves as shown by arrows E both to cool the heated fluid that leaves combustor (16) and to protect the blades of the turbine rotor disk against damage.

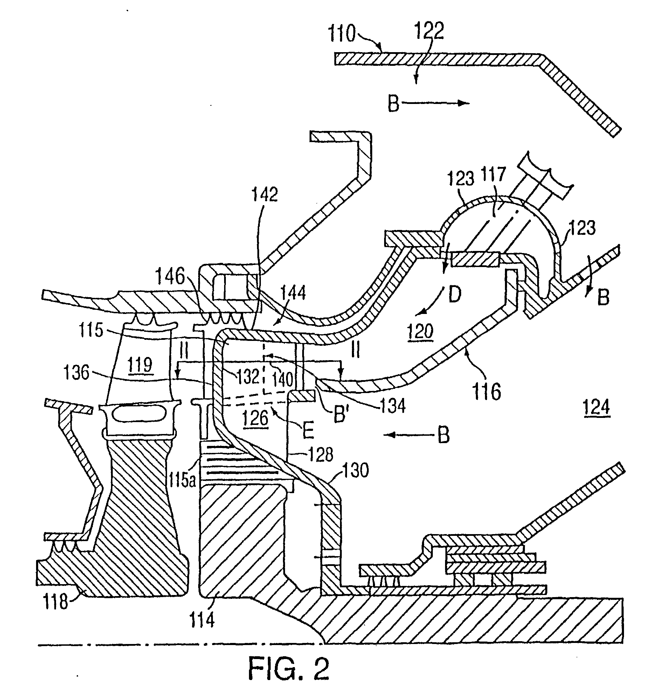

Referring to Figure 2, in which similar parts are shown at the same reference numerals as in Figure 1 with addition of 100, a turbine rotor disk (114) has blades (115) mounted by means of a root portion (115a) in the rotor disk and is located immediately downstream of combustor (116) to receive the heated fluid formed in combustion zone (120) as shown by arrow D. Combustor (116) also receives combustion air in the amount necessary as it is well known to those skilled in the art. Combustion air is supplied through a separate line not shown.

Organizing the supply of combustion air is well known to those skilled in the art and is not described in detail here. It should be noted, however, that air could be admitted tangentially to the prevailing direction of flow in the combustor (see arrows D in Figure 1). This is a known method to impart a spin to the flow of heated fluid. This helps make the flow of the heated fluid compatible with the rotation of the compressor turbine rotor disk. Alternatively, angles of entry to the turbine rotor blades may be used to obtain a similar result. In that case, there will be no need to admit combustion air tangentially.

A compressor turbine rotor disk (118) is mounted downstream of turbine rotor disk (114) and has blades (119). A passage (122) connects the space between turbine rotor disk (114) and a compressor (not shown) in a zone (124), which is defined by the inner annular wall of combustor (116). The fluid from the compressor moves in a direction along arrow B and is admitted to the turbine rotor disk blades (115).

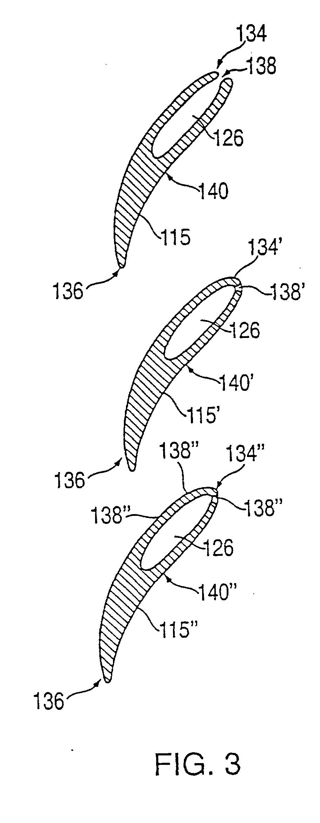

In Figure 3, blade (115) has an internal passage (126) with an inlet opening (128), a tapered portion (130), and a straight portion (132). The walls of internal passage (126) are positioned at an optimum angle of entry that assures a smooth incidence of the fluid flow upon the walls of the passage, such optimal angle of entry being readily ascertainable by those skilled in the art. Blade (115) has an inlet edge (134) on the side of combustor (116) and an outlet edge (136) on the opposite side. The inlet edge has either a fluid outlet slit (138), ports (138') arranged along the inlet edge, or a plurality of ports (138") arranged along several lines. Various outlets can be provided in the turbine rotor disk blades (115) such as multiple slits, rows of ports, and the like. Blades (115) of the turbine rotor disk may not have a detachable root portion and can be made integral with the rotor disk.

A portion (140) between the inlet edge and the outlet edge of blade (115) defines a blade flow portion along which the fluid from the compressor moves after leaving the straight portion (132) of internal passage (126). This fluid envelops flow portion (140) of blade (115), thus forming a layer of fluid over the blade surface and providing a thermal insulating layer against the heated fluid coming from the combustor (116). The heated fluid is formed in the combustor combustion zone (120) using fuel fed from a fuel source (not shown) through a pipe (117), and moves to blade (115) without being preliminarily cooled. When this heated fluid reaches the blade (115), it will move along blade flow portion (140) over the layer of the relatively cool fluid that is supplied from the compressor, and only partly mixes with it. This layer separation of hot and cool fluid protects the blade against overheating. As can be seen in Figure 2, a part of the fluid from the compressor leaves internal passage (126) of blade (115), moves along arrow A and returns to the inner surface of a shroud (142) of blade (115). At the same time, a part of the fluid from space (124) upstream of turbine rotor disk (114) passes through a clearance between the edge of the inner annular wall of combustor (116) and the edge of blade (115) as shown by arrow B'. This fluid protects the remaining surfaces in the inter-blade space.

When the heated fluid leaves blades (115) of turbine rotor disk (114), it moves to blades (119) of compressor turbine rotor disk (118). It should be noted that the fluid from the compressor that envelops turbine blade (115) also moves to compression turbine blade (119). When the heated fluid and the fluid from the compressor reach the compressor turbine rotor disk, they both will have about the same temperature.

The cooling fluid fills an annular space (144). This fluid will move between the casing and labyrinth seals (146) to protect the inner surface of the casing in this area.

The description of this embodiment shows that there is no cooling zone in combustor (116). The absence of the cooling zone in combustor (116) means a smaller combustor size and eliminating cooling zone losses that occur in mixing the heated fluid with a cooler fluid. When the heated fluid moves along flow portions (140) of blades (114) over the fluid layer from the compressor, there is only incomplete mixing of the two fluids, so the losses in this zone are minimized. Because the compressor fluid is cooler, it has lower viscosity. This lower viscosity fluid moves along the blade surface and determines the boundary losses. According to principles of fluid mechanics, because the heated fluid, which is at a temperature of about 2,000K, has a higher viscosity, it is prevented from moving over the blade surface by the lower viscosity fluid. There is no direct contact between the heated fluid and the surface of the engine components, so these components do not experience thermally-induced stress to the same degree as prior art gas turbines. Moreover, the composition and temperature of the cooler fluid fed from the compressor--which does contact the blade material--reduces that fluid's corrosiveness to the blade material relative to the corrosiveness of heated fluid coming directly from the combustor. This prolongs blade life.

In addition to undergoing incomplete mixing, the heated fluid and the fluid from the compressor expand when they meet, decreasing their temperature. Consequently, the oxidation reactions downstream of the combustor will not be as intensive as in the prior art engines. This means that less NOₓ will be formed, and the engine according to the invention consequently will be less harmful to the environment.

When fluid is fed from the compressor to the turbine blades, it carries a large amount of energy. This fluid expands in the area between the inlet and outlet edges of the blades. In prior art engines, this fluid lost a part of its energy in the combustor cooling zone. These cooling losses are avoided in this invention. The work performed at this expansion is about one half the turbine power. The quantity of this fluid is larger than the quantity of the hot gases coming from the combustor, but it is cooler, which explains why the amount of work is only one half of the turbine power.

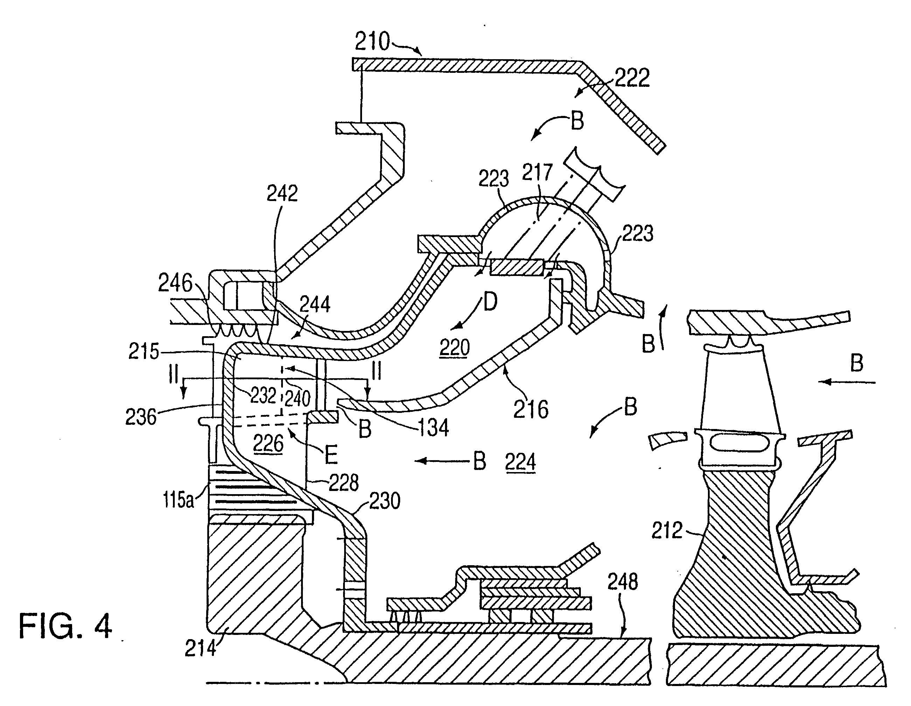

In another embodiment shown in Figure 4, where similar parts are shown at the same reference numerals as in Figure 2, with the addition of 100, the only difference is that the gas turbine engine has one turbine rotor disk (214), and a compressor (212) is driven by a shaft (248). Otherwise, the design and operation of this embodiment are the same.

The preferred embodiment of the invention have been described above. It is, however, understood that various modifications and changes to the embodiments presented herein are possible without going beyond the spirit and scope of the invention defined in the attached claims.

This invention is an improvement over the prior art. US patent to Branstrom et al. (Pat. 3,826,084) (D1) discloses a gas turbine engine, while the German patent to General Electric Co. (Pat. DE 3,713,923) (D2) discloses an improvement to D1 and does not stand alone. The prior art discloses a gas turbine engine in which a cooling air flow is actually directed from the compressor to the first stage turbine blade through a passage. This air, indeed, cools the blade surfaces.

The combustor in D 1 (which is referred to as a burner) has a combustion zone and a mixing or dilution zone between the combustion zone and the first stage turbine blades. The main stream from the compressor goes to the mixing or dilution zone of the combustor through the non-referenced passage. The flow of heated gas from the combustion zone of the combustor is diluted with the main stream of air from the compressor to lower the temperature of the hot gas before it hits the first stage turbine blades. This explains why the flow of air through the passageway is relatively small (normally 2 to 10% of the total compressor air flow). This is because the gas leaving the combustor and incident upon the blades of the first turbine stage is already cooled down in the mixing or dilution zone. The additional cooling with the system disclosed in the applied reference is needed as a tradeoff so as not to add more air to the combustor. This additional cooling is necessary because of the three adverse phenomena associated with the mixing or dilution zone:
- More air in the mixing or dilution zone results in smaller temperature difference between the hot gas and the turbine blade metal, which prevents increasing the first stage power.
- More air in the mixing or dilution zone results in higher mixing losses when the two flows (hot gas from the combustion zone and cool air from the compressor) meet since they have different temperature, and the mixing is vigorous and thorough.
- More air in the mixing or dilution zone results in higher NOx levels.

This is why the gas turbine engine designers have been looking for a tradeoff where on the one hand the amount of air fed to the mixing zone is sufficient to lower the hot gas temperature to a more or less acceptable limit from the viewpoint of the blade material technology and, on the other hand, the amount of cooling gas in the mixing zone is not too big in order to mitigate the above-mentioned adverse effects. In so doing, designers find that the temperature of the hot gas after the mixing or dilution zone is still too high for the blades of the first turbine stage, if they want to have a big temperature difference to obtain more power from the first turbine stage. This is why a separate cooling system for the blades is used, with the cool and clean air fed directly from the compressor to the turbine blade surfaces.

More specifically, an increase in the first stage power is closely related with the difference between the temperature of the gas before the turbine and the blade metal temperature. Thus "It is known that the difference of temperature of the gas before the turbine and the blade metal temperature${\text{ΔT=T}}_{\text{c}} {\text{-T}}_{\text{w}} {\text{≈ (c}}^{\text{2}} {}_{\text{1}} {\text{-w}}^{\text{2}} {}_{\text{1}} {\text{)/2c}}_{\text{p}}$ depends on the difference in heat across the first stage and on the reactivity, and this temperature difference is normally ΔT = 30°C to 60°C.... Further increase in the temperature [Tc - before the turbine] is possible by using cooled blades. The use of cooled blades is associated with additional energy losses. ...." (A. G. Kostyuk, A. M. Sherstyuk. Gas Turbine Units. M. Vyscshaya Shkola Publishing House. 1979, p. 79).

The same source gives the following data on the effect of the blade cooling on the efficiency of the gas turbine engine: "Let us consider the effect of the additional cooling losses on the economy of a Gas Turbine Unit (GTU) as applied to a simple air-cooled GTU. The air cooling of the turbine is carried out with air taken from the compressor. The cooling air flow is 2 to 4% and more of the total air flow. Thus, in order to reduce the working temperature of the blades by 250°C, about 2% of air should be used. This air does not do work and enters the next stage with a much lower temperature and the gas temperature." (*ibid*, p. 79). Further, "In other words, when the cooling air flow is 1%, the GTU efficiency decreases by 1.2%." (*ibid*, p. 80). It will be understood that the use of 4% of the air flow for cooling will results in about 5% loss of efficiency.

In the claimed invention, blade cooling is assured by directing 55% and more of the fluid flow to the first stage blades. One would say that this will amount to a zero efficiency of the gas turbine engine with reference to the above data. The question is, why it does not happen in the claimed gas turbine engine?

The answer to this question is that the blade cooling and the mixing or dilution are combined in the claimed gas turbine engine, and both processes occur in the same zone that can also be referred to as a mixing zone by analogy with the prior art. The difference from the prior art is that the mixing (dilution zone) is relocated from the combustor into the first turbine stage and is now (according to the claimed invention) located between the inlet edge and the outlet edge of the first stage turbine blade. Similarly to conventional gas turbines, the mixing zone immediately follows the combustion zone exactly as is the case of D1 because there are no vanes between the combustor and the first stage in the claimed invention. The claimed system has a combustion zone which occupies the whole interior space of the combustor, whereas the mixing or dilution zone is located in the first turbine stage, along the blade of the turbine. The main stream of air from the compressor, 55% to 85%, goes to this mixing or dilution zone. This means that the mixing or dilution of the hot fluid from the combustion zone occurs in the mixing zone within the first turbine stage. But this is the only similarity to the prior art.

When air from the compressor is fed to the mixing zone of a conventional combustor, this air is vigorously and thoroughly mixed with the hot gas and then both the hot gas and this air move through the vanes in D1 before hitting the blades of the first stage. This results in two things happening:
- the combined gas and air flow absolute velocity increases to about 650 m/s;
- the pressure in the zone within the first stage turbine blade decreases substantially (by a factor of about two).

The result of these phenomena is that the absolute velocity of the gas flow incident upon the first stage turbine blade is 650 m/s and the absolute velocity of the blade cooling air flow is about 450 m/s as a result of the above-mentioned substantial pressure reduction. As the values of the absolute velocities are squared in estimating the additional blade cooling losses, this velocity difference explains the high blade cooling losses referred to above.

In the case of the claimed invention, there are no vanes upstream of the first stage turbine blades, as a result of the inlet edge being positioned immediately downstream of the combustion zone for receiving heated fluid from said combustion zone. For this reason, the absolute velocity of the gas flow from the combustion zone is about 120 m/s. As there are no vanes upstream of the first turbine stage, there is no substantial pressure reduction, and the flow of fluid supplied for the blade cooling has an absolute velocity of about 60 to 90 m/s, which explains very low losses in the mixing (dilution) zone of the claimed gas turbine engine. These losses will be determined by a small absolute velocity difference (or by small absolute values of the absolute velocities).

It should be added that this small velocity difference, as well as the comparable mass flows of the hot gas from the combustion zone and of the fluid directed to the blades for cooling result in the two flows moving in separate layers along the first stage turbine blade, with the fluid that is cooler covering and protecting the blade metal against overheating.

Even if there are certain losses when the two flows meet in the first stage turbine because of a difference of velocities, they are smaller than the mixing losses in the prior art combustor since the two layers are not mixed as violently and thoroughly as in the mixing zone of the prior art combustor. The mixing in the claimed invention occurs between the layers predominantly under the effect of the temperature gradient because the differences in velocity and pressure between the two flows are very small. The mixing losses occurring in the first turbine stage are more than compensated for by the absence of the additional blade cooling losses which occur in the prior art gas turbines.

Thus, the advantages of the claimed invention over prior art is:
- the mixing losses are lower than the mixing losses in the prior art combustor.
- both hot gas from the combustion zone and the cooling gas from the compressor, which goes for blade cooling) are expanded in the turbine and both do work, with the hot gas having more energy before the expansion because of absence of pre-cooling in the mixing zone and because of absence of the mixing losses.
- no air is fed to the combustor exit zone (which is at a very high temperature), so NOx levels are lower.

## Claims

1. A method of operating a gas turbine engine having a compressor (12) for producing a fluid flow, a casing (10), a combustion zone (20) in said casing, a turbine rotor disk (14) with blades (115), each blade having an inlet edge (134) and an outlet edge (136) defining a blade flow portion (140) therebetween, **characterized in that** said inlet edge being positioned immediately downstream of said combustion zone, and **in that** said method further comprises:
- supplying fuel and combustion air to said combustion zone for burning said fuel in said combustion zone to prepare a heated fluid;
- supplying said heated fluid from said combustion zone directly to said blade flow portion; and
- supplying said fluid flow from said compressor to said blade flow portion, whereby a mixing zone is defined within said blade flow portion.

2. The method of claim 1, wherein each of said blades has an interior passage, said fluid flow being supplied to said blade flow portion through said interior passage.

3. The method of claim 1, wherein said fluid flow from said compressor supplied to said blade flow portion comprises between 55% and 85% of the total fluid flow from the compressor.

4. A gas turbine engine, said gas turbine engine comprising, a compressor (12) for producing a fluid flow, a fuel source, a source of combustion air, a casing (10), a combustion zone (20) in said casing, said combustion zone communicating with said fuel source and with said source of combustion air to prepare a heated fluid by burning said fuel, **characterized in that** said gas turbine engine further comprises:
- a turbine rotor disk (14) with blades (115), each of said blades having an inlet edge (134), an outlet edge (136), and a blade flow portion (140) between said inlet edge and said outlet edge, said inlet edge being positioned immediately downstream of said combustion zone to receive said heated fluid;
- a mixing zone in said casing, said mixing zone communicating with said compressor, said mixing zone being located within said blade flow portion.

5. The gas turbine engine of claim 4, wherein each of said blades has an interior passage, said fluid flow being supplied to said blade flow portion through said interior passage.

6. The gas turbine engine of claim 5, wherein each interior passage has a throughput capacity, said throughput capacity substantially corresponding to said fluid flow divided by the number of said blades.

7. The gas turbine engine of claim 4, wherein said fluid flow being supplied to said blade flow portion from said compressor comprises between 55% and 85% of the total fluid from the compressor.

8. A gas turbine engine, said gas turbine engine comprising, a compressor (12) for producing a fluid flow, a fuel source, a source of combustion air, a casing (10), a combustion zone (20) in said casing, said combustion zone communicating with said fuel source and with said source of combustion air to prepare a heated fluid by burning said fuel, **characterized in that** said gas turbine engine further comprises:
- a turbine rotor disk (14) with blades (115), each of said blades having an inlet edge (134), an outlet edge (136), and a blade flow portion (140) between said inlet edge and said outlet edge, said inlet edge being positioned immediately downstream of said combustion zone to receive said heated fluid;
- a mixing zone in said easing, said mixing zone communicating with said compressor, said mixing zone being located within said blade flow portion;
- a compressor turbine rotor disk (118) having blades (119), said compressor turbine rotor disk rotating in a direction opposite to the direction of rotation of said turbine rotor disk (14);
- said blade flow portion communicating with said compressor, whereby an inlet flow portion defines said mixing zone.

9. The gas turbine engine of claim 8, wherein each of said blades has an interior passage, said fluid flow being supplied to said blade flow portion through said interior passage.

10. The gas turbine engine of claim 9, wherein each interior passage has a throughput capacity, said throughput capacity substantially corresponding to said fluid flow divided by the number of said blades.

11. The gas turbine engine of claim 8, wherein said fluid flow being supplied to said blade flow portion from said compressor comprises between 55% and 85% of the total fluid from the compressor.

## Patentansprüche

1. Verfahren zum Betreiben einer Gasturbine, welche einen Kompressor (12) zum Erzeugen eines Fluidstroms, ein Gehäuse (10), eine Verbrennungszone (20) in dem Gehäuse, eine Turbinenrotorscheibe (14) mit Schaufeln (115) aufweist, wobei jede Schaufel eine Einlaßkante bzw. einen Einlaßrand (134) und eine Auslaßkante bzw. einen Auslaßrand (136) aufweist, welche einen Schaufelströmungsabschnitt (140) dazwischen definieren, **dadurch gekennzeichnet, daß** die Schaufeleinlaßkante unmittelbar stromabwärts von der Verbrennungszone positioniert ist, und daß das Verfahren weiters umfaßt:
- ein Zuführen von Kraftstoff und Verbrennungsluft zu der Verbrennungszone zum Verbrennen des Kraftstoffs in der Verbrennungszone, um ein erwärmtes bzw. erhitztes Fluid vorzubereiten bzw. herzustellen;
- ein Zuführen des erhitzten Fluids von der Verbrennungszone direkt zu dem Schaufelströmungsabschnitt; und
- ein Zuführen des Fluidstroms von dem Kompressor zu dem Schaufelströmungsabschnitt, wodurch eine Mischzone innerhalb des Schaufelströmungsabschnitts definiert wird.

2. Verfahren nach Anspruch 1, worin jede der Schaufeln einen inneren Durchtritt bzw. Durchgang aufweist, wobei der Fluidstrom zu dem Schaufelströmungsabschnitt durch den inneren Durchtritt zugeführt wird.

3. Verfahren nach Anspruch 1, worin der Fluidstrom von dem Kompressor, welcher zu dem Schaufelströmungsabschnitt zugeführt wird, zwischen 55% und 85% des gesamten Fluidstroms von dem Kompressor umfaßt.

4. Gasturbine, wobei die Gasturbine einen Kompressor (12) zum Herstellen eines Fluidstroms, eine Kraftstoffquelle, eine Verbrennungsluftquelle, ein Gehäuse (10), eine Verbrennungszone (20) innerhalb des Gehäuses umfaßt, wobei die Verbrennungszone mit der Kraftstoffquelle und mit der Verbrennungsluftquelle in Verbindung steht, um ein erwärmtes bzw. erhitztes Fluid durch ein Verbrennen des Kraftstoffes vorzubereiten bzw. herzustellen, **dadurch gekennzeichnet, daß** die Gasturbine weiters umfaßt:
- eine Turbinenrotorscheibe (14) mit Schaufeln (115), wobei jede der Schaufeln einen Einlaßrand bzw. eine Einlaßkante (134), einen Auslaßrand bzw. eine Auslaßkante (136) und einen Schaufelströmungsabschnitt (140) zwischen der Einlaßkante und der Auslaßkante aufweist, wobei die Einlaßkante unmittelbar stromabwärts von der Verbrennungszone positioniert ist, um das erwärmte Fluid aufzunehmen;
- eine Mischzone in dem Gehäuse, wobei die Mischzone mit dem Kompressor in Verbindung steht, wobei die Mischzone innerhalb des Schaufelströmungsabschnitts angeordnet ist.

5. Gasturbine nach Anspruch 4, worin jede der Schaufeln einen inneren Durchtritt aufweist, wobei der Fluidstrom zu dem Schaufelströmungsabschnitt durch den inneren Durchtritt zugeführt wird.

6. Gasturbine nach Anspruch 5, worin jeder innere Durchtritt eine Durchsatzkapazität aufweist, wobei die Durchsatzkapazität im wesentlichen dem Fluidstrom dividiert durch die Anzahl der Schaufeln entspricht.

7. Gasturbine nach Anspruch 4, worin der Fluidstrom, welcher zu dem Schaufelströmungsabschnitt von dem Kompressor zugeführt wird, zwischen 55% und 85% des gesamten Fluids von dem Kompressor umfaßt.

8. Gasturbine, wobei die Gasturbine einen Kompressor (12) zum Herstellen eines Fluidstroms, eine Kraftstoffquelle, eine Verbrennungsluftquelle, ein Gehäuse (10), eine Verbrennungszone (20) innerhalb des Gehäuses umfaßt, wobei die Verbrennungszone mit der Kraftstoffquelle und mit der Verbrennungsluftquelle in Verbindung steht, um ein erwärmtes bzw. erhitztes Fluid durch ein Verbrennen des Kraftstorfes vorzubereiten bzw. herzustellen, **dadurch gekennzeichnet, daß** die Gasturbine weiters umfaßt:
- eine Turbinenrotorscheibe (14) mit Schaufeln (115), wobei jede der Schaufeln einen Einlaßrand bzw. eine Einlaßkante (134), einen Auslaßrand bzw. eine Auslaßkante (136) und einen Schaufelströmungsabschnitt (140) zwischen der Einlaßkante und der Auslaßkante aufweist, wobei die Einlaßkante unmittelbar stromabwärts von der Verbrennungszone positioniert ist, um das erwärmte Fluid aufzunehmen;
- eine Mischzone in dem Gehäuse, wobei die Mischzone mit dem Kompressor in Verbindung steht, wobei die Mischzone innerhalb des Schaufelströmungsabschnitts angeordnet ist;
- eine Kompressorturbinenrotorscheibe (118), welche Schaufeln (119) aufweist, wobei sich die Kompressorturbinenrotorscheibe in einer Richtung entgegengesetzt zu der Rotationsrichtung der Turbinenrotorscheibe (14) dreht;
- den Schaufelströmungsabschnitt, der mit dem Kompressor in Verbindung steht, wodurch ein Einlaßströmungsabschnitt die Mischzone definiert.

9. Gasturbine nach Anspruch 8, worin jede der Schaufeln einen inneren Durchtritt aufweist, wobei der Fluidstrom zu dem Schaufelströmungsabschnitt durch den inneren Durchtritt zugeführt wird.

10. Gasturbine nach Anspruch 9, worin jeder innere Durchtritt eine Durchsatzkapazität aufweist, wobei die Durchsatzkapazität im wesentlichen dem Fluidstrom dividiert durch die Anzahl der Schaufeln entspricht.

11. Gasturbine nach Anspruch 8, worin der Fluidstrom, welcher zu dem Schaufelströmungsabschnitt von dem Kompressor zugeführt wird, zwischen 55% und 85% des gesamten Fluids von dem Kompressor umfaßt.

## Revendications

1. Procédé de fonctionnement d'un moteur de turbine à gaz ayant un compresseur (12) pour produire un flux de fluide, un carter (10), une zone de combustion (20) dans ledit carter, un disque rotor de turbine (14) avec des aubes (115), chaque aube ayant une arête d'entrée (134) et une arête de sortie (136) définissant une partie de flux d'aube (140) entre celles-ci, **caractérisé en ce que** ladite arête d'entrée est positionnée immédiatement en aval de ladite zone de combustion, et **en ce que** ledit procédé comprend :
- le fait de fournir du carburant et de l'air de combustion à ladite zone de combustion pour brûler ledit carburant dans ladite zone de combustion pour préparer un fluide chauffé ;
- le fait de fournir ledit fluide chauffé à partir de ladite zone de combustion directement à ladite partie de flux de l'aube ; et
- le fait de fournir ledit flux de fluide à partir dudit compresseur à ladite partie de flux de l'aube, moyennant quoi une zone de mélange est définie à l'intérieur de ladite partie de flux de l'aube.

2. Procédé selon la revendication 1, dans lequel chacune desdites aubes a un passage intérieur, ledit flux de fluide étant fourni à ladite partie de flux de l'aube par l'intermédiaire dudit passage intérieur.

3. Procédé selon la revendication 1, dans lequel ledit flux de fluide en provenance dudit compresseur fourni à ladite partie de flux de l'aube comprend entre 55 % et 85 % du flux de fluide total en provenance du compresseur.

4. Moteur de turbine à gaz, ledit moteur de turbine à gaz comprenant un compresseur (12) pour produire un flux de fluide, une source de carburant, une source d'air de combustion, un carter (10), une zone de combustion (20) dans ledit carter, ladite zone de combustion communicant avec ladite source de carburant et avec ladite source d'air de combustion pour préparer un fluide chauffé en brûlant ledit carburant, **caractérisé en ce que** ledit moteur de turbine à gaz comprend en outre :
- un disque rotor de turbine (14) avec des aubes (115), chacune desdites aubes ayant une arête d'entrée (134), une arête de sortie (136), et une partie de flux d'aube (140) entre ladite arête d'entrée et ladite arête de sortie, ladite arête d'entrée étant positionnée immédiatement en aval de ladite zone de combustion pour recevoir ledit fluide chauffé ;
- une zone de mélange dans ledit carter, ladite zone de mélange communiquant avec ledit compresseur, ladite zone de mélange étant située à l'intérieur de ladite partie de flux de l'aube.

5. Moteur de turbine à gaz de la revendication 4, dans lequel chacune desdites aubes a un passage intérieur, ledit flux de fluide étant fourni à la partie de flux de l'aube par l'intermédiaire dudit passage intérieur.

6. Moteur de turbine à gaz de la revendication 5, dans lequel chaque passage intérieur a une capacité totale d'aspiration, ladite capacité totale d'aspiration correspondant sensiblement audit flux de fluide divisé par le nombre de dites aubes.

7. Moteur de turbine à gaz de la revendication 4, dans lequel ledit flux de fluide étant fourni à ladite partie de flux de l'aube à partir du compresseur comprend entre 55 % et 85 % du fluide total en provenance du compresseur.

8. Moteur de turbine à gaz, ledit moteur de turbine à gaz comprenant un compresseur (12) pour produire un flux de fluide, une source de carburant, une source d'air de combustion, un carter (10), une zone de combustion (20) dans ledit carter, ladite zone de combustion communiquant avec ladite source de carburant et avec ladite source d'air de combustion pour préparer un fluide chauffé en brûlant ledit carburant, **caractérisé en ce que** ledit moteur de turbine à gaz comprend en outre :
- un disque rotor de turbine (14) avec des aubes (115), chacune desdites aubes ayant une arête d'entrée (134), une arête de sortie (136) et une partie de flux d'aube (140) entre ladite arête d'entrée et ladite arête de sortie, ladite arête d'entrée étant positionnée immédiatement en aval de ladite zone de combustion pour recevoir ledit fluide chauffé ;
- une zone de mélange dans ledit carter, ladite zone de mélange communicant avec ledit compresseur, ladite zone de mélange étant située à l'intérieur de ladite partie de flux de l'aube ;
- un disque rotor de turbine de compresseur (118) ayant des aubes (119), ledit disque rotor de turbine de compresseur tournant dans une direction opposée à la direction de rotation dudit disque rotor de turbine (14) ;
- ladite partie de flux de l'aube communiquant avec ledit compresseur, moyennant quoi une partie de flux d'entrée définit ladite zone de mélange.

9. Moteur de turbine à gaz de la revendication 8, dans lequel chacune desdites aubes a un passage intérieur, ledit flux de fluide étant fourni à ladite partie de flux de l'aube par l'intermédiaire du passage intérieur.

10. Moteur de turbine à gaz de la revendication 9, dans lequel chaque passage intérieur a une capacité totale d'aspiration, ladite capacité totale d'aspiration correspondant sensiblement audit flux de fluide divisé par le nombre de dites aubes.

11. Moteur de turbine à gaz de la revendication 8, dans lequel ledit flux de fluide étant fourni à ladite partie de flux de l'aube à partir du compresseur comprend entre 55 % et 85 % du fluide total en provenance du compresseur.
